## Europäisches Patentamt
## European Patent Office
## Office européen des brevets

(19)

(11) Numéro de publication: **0 041 455**
**B1**

(12) # FASCICULE DE BREVET EUROPEEN

(45) Date de publication du fascicule du brevet:
06.07.83

(51) Int. Cl.³: **F 24 J 3/02**

(21) Numéro de dépôt: **81400866.0**

(22) Date de dépôt: **27.05.81**

(54) Monture d'orientation de module héliothermique.

(30) Priorité: **30.05.80 FR 8012033**

(43) Date de publication de la demande:
**09.12.81 Bulletin 81/49**

(45) Mention de la délivrance du brevet:
**06.07.83 Bulletin 83/27**

(84) Etats contractants désignés:
**AT CH DE GB IT LI SE**

(56) Documents cités:
**FR-A-2 381 348**
**FR-A-2 403 525**
**FR-A-2 440 526**
**FR-A-2 468 857**
**US-A-3 173 341**

(73) Titulaire: **CREUSOT-LOIRE, 42 rue d'Anjou,
F-75008 Paris (FR)**

(72) Inventeur: **Lhenry, Bernard, 3, rue des Anémones,
F-71200 Le Creusot (FR)**

(74) Mandataire: **Saint-Martin, René et al,
CREUSOT-LOIRE 15 rue Pasquier, F-75383 Paris
Cedex 08 (FR)**

BUNDESDRUCKEREI BERLIN

# Monture d'orientation de module héliothermique

La présente invention se rapporte à une monture d'orientation en site et en azimut du réflecteur parabolique à miroirs d'un module héliothermique concentrant l'énergie solaire par exemple sur une chaudière placée au foyer de ce réflecteur.

On connaît un module héliothermique comprenant un réflecteur à miroirs de forme parabolique destiné à concentrer l'énergie solaire sur une chaudière placée au foyer de ce réflecteur. Ce réflecteur encore appelé concentrateur est orienté en bloc de manière à suivre les mouvements du soleil dans son mouvement diurne.

Il est formé par une coupole parabolique constituée de plusieurs réflecteurs ou miroirs triangulaires montés sur une charpente. Les rayons lumineux se concentrent au foyer sur une chaudière réunie au réflecteur mobile.

La chaudière est de conception monotubulaire, en tube de cuivre revêtu d'un enduit ayant un facteur d'absorption élevé. Cette chaudière permet de chauffer un fluide échangeur qui est évacué par un collecteur. Le réflecteur est monté sur une monture altazimutale qui est préférée à une monture équatoriale. Le réflecteur est monté pivotant, autour d'un axe hoizontal, sur une tourelle de manière à permettre l'orientation en site. Cette tourelle pivote, autor d'une axe vertical, sur un bâti fixé au sol de manière à permettre l'orientation en azimut vers l'ouest ou l'est. L'orientation en site est commandée par un vérin hydraulique dont la tige est articulée sur l'extrados du réflecteur et dont le cylindre est articulé sur la tourelle rotative. Un système à câble et vérin commande l'orientation en azimut. Un module de ce type est par exemple décrit dans FR-A-2 403 525. Il permet de réduire les pertes par rayonnement réfléchi et n'exige pas une grande précision de pointage du fait que la chaudière suit le mouvement du réflecteur. La monture d'orientation doit orienter le réflecteur parabolique selon une position »survie au vent«, l'axe du réflecteur étant vertical lorsque les vents sont violents. La monture d'orientation du réflecteur connue pour ce type de module a certains inconvénients. Elle nécessite en particulier une dépense d'énergie non négligeable.

La présente invention a pour objet une monture d'orientation en site et azimut du réflecteur d'un module tel que décrit précédemment, ne nécessitant qu'une consommation d'énergie réduite. En cas d'incident ou de rupture du circuit hydraulique, la monture d'orientation assure automatiquement le positionnement du réflecteur en position »survie au vent«, l'axe de ce réflecteur vertical. L'invention a en particulier pour objet un système hydraulique à vérin adapté à une telle monture. Cette monture d'orientation procure une grande sécurité de fonctionnement. La monture d'orientation altazimutale selon l'invention est adaptée à un module héliothermique comportant un réflecteur parabolique à miroirs pouvant être orienté autour d'un axe horizontal par un ensemble de commande à vérin à fluide dont le cylindre est articulé à une tourelle et dont la tige est articulée au réflecteur, et elle est essentiellement caractérisée par le fait que le vérin est équipé des moyens de rappel et de verrouillage tendant à faire sortir la tige et à la verrouiller en position de fin de course — tige sortie — où le réflecteur occupe une position telle que son axe de révolution est vertical.

Selon une caractéristique de l'invention, le vérin comporte une cloison fixe comprise entre d'une part un piston solidaire de la tige et séparant une chambre côté tige alimentée en huile et une chambre côté cloison contenant de l'huile et d'autre part un piston mobile coulissant entre ladite cloison et le fond séparant une chambre contenant de l'huile du côté de la cloison et une chambre contenant un gaz du côté fond, les deux chambres situées de part et d'autre de la cloison étant connectées l'une à l'autre sous contrôle d'un clapet piloté.

L'invention va maintenant être décrite avec plus de détails en se référant à un mode de réalisation donné à titre d'exemple et représenté par les dessins annexés.

La figure 1 est une coupe verticale du module héliothermique équipé de la monture d'orientation selon l'invention.

La figure 2 est un schéma d'un système hydraulique d'orientation en site.

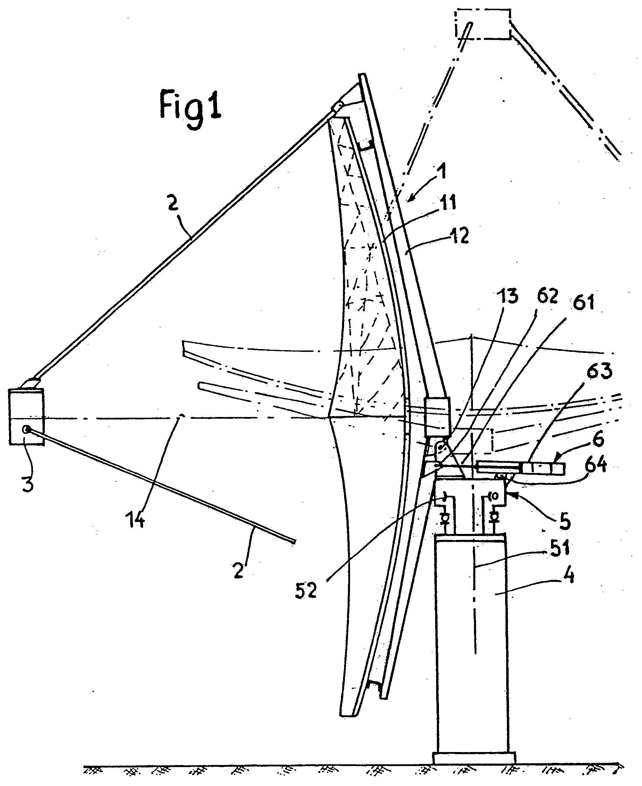

Le module héliothermique qui est représenté par la figure 1 comporte un réflecteur ou concentrateur 1 formé d'une coupole réflectrice 11 de forme parabolique et d'une charpente 12 servant à supporter cette soupole du côté de la partie concave. Cette coupole réflectrice est constituée d'un assemblage de miroirs triangulaires et jointifs. Ces miroirs concentrent les rayons lumineux vers le foyer de la parabole. Le réflecteur est solidaire, par l'intermédiaire d'entretoises rayonnantes 2, d'une chaudière 3 montée au foyer de la coupole parabolique. Cette chadière monotubulaire est en tube de cuivre revêtu d'un enduit ayant un facteur d'apsorption élevé. L'une au moins des entretoises rayonnantes sert à canaliser le fluide échangeur de chaleur qui circule dans le tube de la chaudière.

Le réflecteur 1 à miroirs est supporté par un bâti 4 qui est fixé au sol. Ce réflecteur peut être orienté en site autour d'un axe horizontal d'articulation 13 réunissant la charpente 12 à une tourelle 5. Cette tourelle peut pivoter autour d'un axe vertical 51 par rapport au bâti 4.

La tourelle 5 supporte un réducteur à vis sans fin dont la vis engrène avec une couronne dentée 52 qui est coaxiale à l'axe 51 et qui est solidaire du bâti 4. Ce réducteur est entraîné par un moteur hydraulique.

L'orientation en site du réflecteur parabolique 1, autour de l'axe d'articulation 13, est commandée par un vérin 6. La tige 61 de ce vérin est attelée par une articulation ou une rotule 62 à la charpente 12 du réflecteur. Le cylindre 63 de ce vérin est réuni par une articulation cylindrique 64 à la tourelle 5.

L'articulation 62 est décalée de l'axe de révolution 14 de la coupole parabolique et est décalée d'autre part de l'axe de rotation 51 de la tourelle. L'axe d'articulation 13 est situé entre l'articulation 62 et l'axe de révolution 14.

Le vérin d'orientation en site 6 comprend des moyens de rappel et de verrouillage permettant de faire pivoter le réflecteur 1 d'une position où l'axe de ce réflecteur est incliné vers la position de »suvie au vent« selon laquelle l'axe de révolution 14 est sensiblement vertical et de bloquer le réflecteur dans cette position.

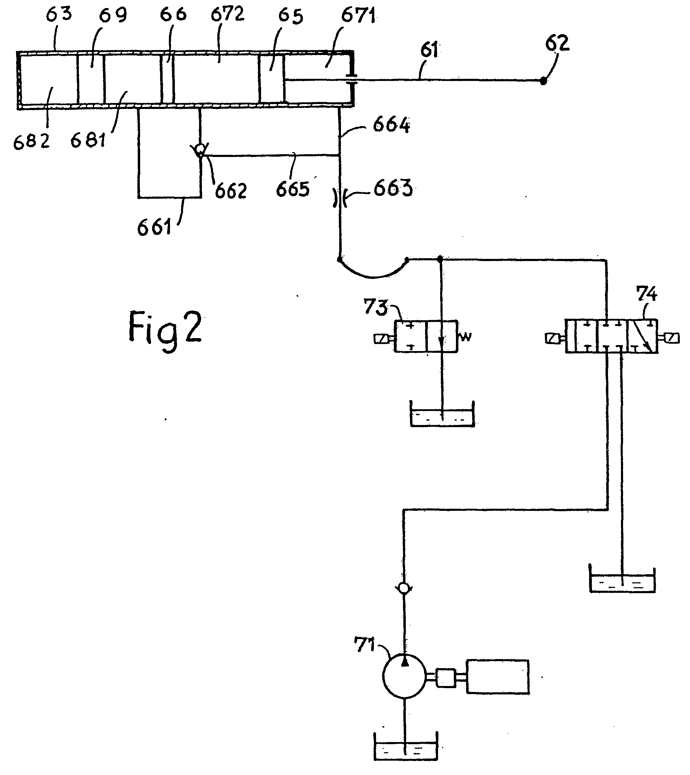

Le vérin d'orientation en site qui est représenté en détail par la figure 2 comprend un cylindre 63 dans lequel est prévue une cloison séparatrice 66 montée fixe entre le fond et le flasque de passage de la tige 61. Cette cloison 66 est disposée entre le piston mobile 65 solidaire de la tige de monaoeuvre 61 et un piston mobile 69. Le piston 65 coulisse entre la cloison 66 et le flasque de passage de la tige. Le piston 69 coulisse entre la cloison et le fond du vérin. Le piston 65 sépare une chambre 671 — côté tige — alimentée en huile ou liquide hydraulique et d'autre part une chambre 672 contenant de l'huile et limitée par la cloison 66. Le piston mobile 69 sépare une chambre 681 — côté cloison 66 — contenant de l'huile et une chambre 682 limtée par le fond et contenant un gaz sous pression tel que de l'azote. Les deux chambres intermédiaires 672 et 681 situées de part et d'autre de la cloison 66 et contenant de l'huile ou du liquide hydraulique sont connectées par une canalisation 661 sur laquelle est monté un clapet anti-retour piloté 662 qui contrôle la circulation de l'huile entre ces chambres. La chambre 671 traversée par le tige est alimentée en huile par un conduit 664 au travers d'un orifice calibré 663. Le clapet 662 est contrôlé par un conduit 665 branché en aval de l'orifice 663 sur le conduit 664. Une pompe 71 fournit l'huile ou le liquide hydraulique à la chambre 671 et au clapet piloté 662 par le conduit 664. Le débit d'huile est contrôlé par des électrovalves à billes 73 et 74.

Le fonctionnement du mécanisme d'orientation en site va maintenant être décrit.

Pour une valeur quelconque intermédiaire de la position en site, la chambre 671 traversée par la tige est en pression. L'effort produit par la pression d'azote dans la chambre 682 l'emporte sur l'effort dû au poids du réflecteur ce qui assure un suréquilibrage. Du fait de la pression en aval de l'orifice 663, le clapet 662 est piloté ouvert. Les chambres intermédiaires 681 et 672 sont en communication par le conduit 661 et se comportent comme une chambre d'huile. Les pistons 69 et 65 se déplacent en synchronisme comme s'ils étaient solidaires.

Lorsque l'huile venant de la pompe est introduite dans la chambre 671, la tige rentre et le piston 69 comprime l'azote. Lorsque l'huile de la chambre 671 s'écoule vers le réservoir par ouverture de la vanne 73 ou de la vanne 74, l'azote contenu dans la chambre 682 repousse le piston 69 et le piston 65 de manière à faire sortir la tige. En fin de course des pistons (tige 61 sortie au maximum) la pression hydraulique s'annule en aval de l'orifice 663, notamment dans la chambre 671, puisqu'il n'ya plus de déplacement de fluide à travers cet orifice. Le clapet 662 n'est plus piloté et s'oppose au passage del'huile entre la chambre 672 limitée par le piston 65 solidaire de la tige et la chambre 681 limitée par le piston sans tige. Dans cette position de fin de course — tige sortie — le réflecteur est en position de survie au vent (axe de révolution sensiblement en position verticale) et le vérin assure un verrouillage en position de la tige. La tige ne peut alors pas rentrer et le réflecteur ne peut pas pivoter même dans le cas où vent violent agirait sur ce réflecteur.

## Revendications

1. Monture d'orientation d'un module héliothermique comportant un réflecteur parabolique (1) à miroirs pouvant être orienté autour d'un axe horizontal (13), par un ensemble de commande à vérin à fluide (6) dont le cylindre (63) est articulé à une tourelle (5) et dont la tige (61) est articulée au réflecteur (1), caractérisée par le fait que le vérin (6) est équipé de moyens de rappel et de verrouillage tendant à faire sortir la tige (61) et à la verrouiller en position de fin de course-tige-sortie où le réflecteur (1) occupe une position telle que son axe de révolution (14) soit sensiblement vertical.

2. Monture selon la revendication 1, caractérisée par le fait que le vérin (6) comporte une cloison fixe (66) comprise d'une part entre un piston (65) solidaire de la tige (61) et séparant une chambre (671) côté tige alimentée en huile et une chambre (672) côté cloison contenant de l'huile et d'autre part un piston mobile (69) coulissant entre ladite cloison (66) et le fond en séparant une chambre (681) contenant de l'huile du côté de la cloison et une chambre (682) contenant un gaz du côté fond, les deux chambres (672, 681) situées de part et d'autre de la cloison étant connectées l'une à l'autre sous contrôle d'un clapet poloté (662).

3. Monture selon la revendication 2, caractérisée par le fait que la chambre (671) traversée par la tige (61) est alimentée en huile au travers d'un orifice calibré (663).

4. Monture selon la revendication 1 ou 2, caractérisée par le fait que l'axe d'articulation horizontal (13) du réflecteur (1) sur la tourelle (5) est décalé d'une part de l'axe de rotation (51) de ladite tourelle (5) et d'autre part de l'axe de révolution (14) du réflecteur.

**Patentansprüche**

1. Richt- bzw. Orientierungsvorrichtung für eine heliothermische Baueinheit, die einen Parabolreflektor (1) mit Spiegeln besitzt und um eine horizontale Achse (13) mittels einer Steueranordnung mit einer Fluidverstelleinrichtung bzw. einem Fluidarbeitszylinder (6) ausrichtbar ist, deren bzw. dessen Zylinder (63) an einem Turm bzw. Drehturm (5) und deren bzw. dessen Stange (61) am Reflektor (1) angelenkt ist, dadurch gekennzeichnet, daß die Verstelleinrichtung bzw. der Fluidarbeitszylinder (6) mit Rückführungs- und Verriegelungseinrichtungen versehen ist, mit denen die Stange (61) ausfahrbar und in ihrer ausgefahrenen Endstellung verriegelbar ist, in welcher der Reflektor (1) eine Stellung einnimmt, in welcher seine Symmetrie- bzw. Umdrehungsachse (14) annähernd vertikal steht.

2. Vorrichtung nach Anspruch 1, dadurch gekennzeichnet, daß die Verstelleinrichtung bzw. der Fluidarbeitszylinder (6) eine feststehende Trennwand (66) aufweist, die einerseits zwischen einem mit der Stange (61) fest verbundenen Kolben (65), der eine mit Öl versorgte stangenseitige Kammer (671) und eine Öl enthaltende trennwandseitige Kammer (672) trennt, und anderseits einem bewegbaren Kolben (69) angeordnet ist, der zwischen der Trennwand (66) und dem Boden gleitet und eine Öl enthaltende trennwandseitige Kammer (681) und eine Gas enthaltende bodenseitige Kammer (682) trennt, wobei die beiden Kammern (672, 681) die beiderseits der Trennwand angeordnet sind, untereinander mittels eines Steuerventils (662) verbunden sind.

3. Vorrichtung nach Anspruch 2, dadurch gekennzeichnet, daß die von der Stange (61) durchsetzte Kammer (671) über eine kalibrierte Öffnung (663) mit Öl gespeist wird.

4. Vorrichtung nach Anspruch 1 oder 2, dadurch gekennzeichnet, daß die horizontale Gelenkachse (13) des Reflektors (1) auf dem Turm bzw. Drehturm (5) sowohl gegenüber der Rotationsachse (51) des Turmes bzw. Drehturms (5) als auch gegenüber der Symmetrie- bzw.

Umdrehungsachse (14) des Reflektors versetzt ist.

**Claims**

1. Orientation mounting for a heliothermal module, comprising a parabolic reflector (1) with mirrors which can be oriented about a horizontal pivot pin (13) by means of a hydraulic-jack control assembly (6), the cylinder (63) of which is hinged to a turret (5) and the rod (61) of which is hinged to the reflector (1), characterised in that the jack (6) is equipped with restoring and locking means which tend to extend the rod (61) and lock it in the position of the end of travel of the rod extension in which the reflector (1) occupies such a position that its axis of rotation (14) is substantially vertical.

2. Mounting according to Claim 1, characterised in that the jack (6) incorporates a fixed partition (66) located, on the one hand, between a piston (65) fixed to the rod (61) and separating a chamber (671) on the same side as the rod, which is fed with oil, and a chamber (672) on the same side as the partition, containing the oil, and, on the other hand, a movable piston (69) sliding between the said partition (66) and the bottom, separating a chamber (681) containing oil on the same side as the partition and a chamber (682) containing a gas on the same side as the bottom, the two chambers (672, 681) located on either side of the partition being connected to one another under the control of a driven flap valve (662).

3. Mounting according to Claim 2, characterised in that the chamber (671) through which passes the rod (61) is fed with oil via a calibrated orifice (663).

4. Mounting according to Claim 1 or 2, characterised in that the horizontal pivot pin (13) of the reflector (1) on the turret (5) is offset, on the one hand, from the axis of rotation (51) of the said turret (5) and, on the other hand, form the axis of revolution (14) of the reflector.

Fig1

Fig 2